# DEMANDE DE BREVET EUROPEEN

(11) **EP 4 819 101 A1**
(43) Date de publication de la demande: **07.10.2026**
(21) Numéro de dépôt: 26168679.4
(22) Date de dépôt: 27.03.2026
(51) Int. Cl.: G08G 1/16, B60W 30/095, B60W 40/04, B60W 50/14, G01S 13/931, G01S 17/931, G06V 20/58, G06V 20/56, B60W 30/12

(54) **PROCÉDÉ DE DÉTECTION D'OBJETS D'INTÉRÊT POUR UN VÉHICULE AUTOMOBILE CIRCULANT AU SEIN D'UN RÉSEAU ROUTIER**

(30) Priorité: 01.04.2025 FR 2503365
(71) Demandeur: AMPERE s.a.s., 92100 Boulougne-Billancourt (FR)
(72) Inventeur: LE-MEUR, Emmanuel, 06410 BIOT (FR)
(74) Mandataire: Renault Group

(57) **Abrégé**

Procédé de détection d'objets caractérisé en ce qu'il comprend les étapes suivantes :
- Une étape de reconnaissance (E01) du contexte routier (OD) ;
- Une étape de détection (E02) d'un élément de référence (21-26) et d'un objet d'intérêt (01-08) ;
- Une étape d'affectation (E04) d'un indice de confiance à chaque élément de référence (21-26) ;
- Une étape d'identification (E05) d'un type de chaque élément de référence (21-26) détecté ;
- Une étape de détermination (E06) d'une distance latérale de sécurité (D_Lat_S) pour chaque élément de référence (21-26) en fonction du contexte routier (OD) et du type d'élément de référence (21-26) ;
- Une étape de calcul (E07), pour chaque objet d'intérêt (O1-O8), d'une distance de séparation (D_sep) entre l'objet et un élément de référence (21-25) associé ;
- Une étape de comparaison (E08) de la distance de séparation (D_sep) calculée avec la distance latérale de sécurité (D_Lat_S);
- Une étape de signalement (E09) de l'objet (O1-O8) si la distance de séparation (D_sep) calculée est inférieure à la distance latérale de sécurité (D_Lat_S).

## Description

L'invention concerne un procédé de détection d'évènements d'intérêt pour un véhicule automobile circulant au sein d'un réseau routier. L'invention concerne également un système d'aide à la conduite pour un véhicule automobile, le système d'aide à la conduite mettant en œuvre le procédé mentionné. L'invention concerne par ailleurs un véhicule automobile comprenant un tel système d'aide à la conduite. L'invention concerne en outre un produit programme d'ordinateur mettant en œuvre le procédé mentionné. L'invention concerne également un support d'enregistrement de données sur lequel est enregistré un tel programme.

Afin de détecter et d'identifier des incidents tels que des situations à risque sur un réseau routier, les infrastructures routières peuvent être équipées de caméras permettant la vidéosurveillance de diverses zones d'intérêt (intersections, portions d'autoroute, etc.). Toutefois, les moyens déployés pour ce type de surveillance sont très coûteux et la couverture géographique qui en résulte est très limitée.

On connaît également des moyens de communications permettant aux utilisateurs du réseau routier de signaler volontairement des évènements qu'ils rencontrent au cours de leurs déplacements, tels que des accidents, des ralentissements, des bouchons, ou encore la présence d'obstacles sur ou à proximité des voies de circulation. Toutefois, la qualité de ces signalements n'est pas toujours suffisante pour être fiable : la précision géographique est par exemple insuffisante, ou l'incident est signalé avec du retard. Certains incidents ne sont pas signalés du tout, malgré les outils disponibles.

Tous ces facteurs contribuent à une qualité assez limitée et/ou à une couverture assez limitée pour les évènements distants rencontrés par les utilisateurs des infrastructures routières.

Le but de l'invention est de remédier aux inconvénients décrits ci-dessus en proposant un procédé et un système d'aide à la conduite intégré au véhicule qui permettent d'une part de détecter et d'identifier des objets et/ou des évènements présentant une situation à risque dans l'environnement du véhicule circulant au sein du réseau routier et d'autre part de communiquer les informations relatives auxdits objets et/ou des évènements détectées lorsque c'est nécessaire.

A cet effet, l'invention porte sur un procédé de détection d'objets d'intérêt pour un véhicule automobile comprenant des moyens de perception de l'environnement et circulant au sein d'un réseau routier, le procédé étant caractérisé en ce qu'il comprend les étapes suivantes :
- Une étape de reconnaissance du contexte routier dans lequel circule le véhicule automobile ;
- Une étape de détection d'au moins un élément de référence et d'au moins un objet d'intérêt par les moyens de perception de l'environnement du véhicule automobile ;
- Une étape d'affectation d'un indice de confiance à chaque élément de référence détecté ;
- Une étape d'identification d'un type de chaque élément de référence détecté ;
- Une étape de détermination d'une distance latérale de sécurité pour chaque élément de référence présentant un indice de confiance supérieur à un seuil de confiance prédéterminé, la distance latérale de sécurité étant définie selon une direction perpendiculaire à une trajectoire prévisionnelle du véhicule, la distance latérale de sécurité étant déterminée en fonction du contexte routier et en fonction du type de l'élément de référence ;
- Une étape de calcul, pour chaque objet d'intérêt, d'une distance de séparation entre ledit objet d'intérêt et un élément de référence associé, l'élément de référence associé étant l'élément de référence présentant un indice de confiance supérieur au seuil de confiance prédéterminé, le plus proche dudit objet d'intérêt et situé entre le véhicule et ledit objet d'intérêt ou à défaut, la trajectoire prévisionnelle du véhicule ;
- Une étape de comparaison de la distance de séparation calculée avec la distance latérale de sécurité déterminée précédemment ;
- Une étape de signalement de l'objet dans le cas où la distance de séparation calculée est inférieure à la distance latérale de sécurité déterminée précédemment.

Selon un mode de réalisation, l'étape de reconnaissance du contexte routier comprend une sous-étape de géolocalisation du véhicule automobile, afin de connaître sa position dans le réseau routier au sein duquel il évolue.

Selon un mode de réalisation, l'étape de reconnaissance du contexte routier comprend une sous-étape de détermination d'une première distance maximale selon une direction d'avancement du véhicule automobile et une sous-étape de détermination d'une deuxième distance maximale selon une direction latérale, la direction latérale étant perpendiculaire à la direction d'avancement du véhicule automobile ; ces sous-étapes permettant de déterminer un périmètre opérationnel, et l'étape de détection est effectuée dans le périmètre opérationnel défini.

Selon un mode de réalisation, dans le cas où plusieurs éléments de référence distincts sont détectés, le procédé comporte en outre une étape d'identification du nombre de voies de circulation.

Selon un mode de réalisation, au cours de l'étape de calcul, la distance de séparation calculée correspond à la distance minimale séparant l'objet détecté et l'élément de référence associé.

L'invention porte également sur un système d'aide à la conduite pour un véhicule automobile, le système comprenant des éléments matériels et/ou logiciels mettant en œuvre le procédé tel que décrit précédemment, le système comprenant notamment des éléments matériels et/ou logiciels conçus pour mettre en œuvre le procédé décrit précédemment.

L'invention porte également sur un véhicule automobile comprenant un tel système d'aide à la conduite.

L'invention porte également sur un produit programme d'ordinateur comprenant des instructions de code de programme enregistrées sur un support lisible par ordinateur pour mettre en œuvre les étapes du procédé décrit précédemment lorsque ledit programme fonctionne sur un ordinateur, le produit programme d'ordinateur étant caractérisé en ce en ce qu'il comprend des instructions qui, lorsque le programme est exécuté par l'ordinateur, conduisent celui-ci à mettre en œuvre le procédé décrit précédemment.

L'invention porte également sur un support d'enregistrement de données, lisible par un ordinateur, sur lequel est enregistré un programme d'ordinateur comprenant des instructions de code de programme de mise en œuvre du procédé décrit précédemment qui, lorsqu'elles sont exécutées par un ordinateur, conduisent celui-ci à mettre en œuvre le procédé décrit précédemment.

L'invention porte également sur un signal d'un support de données, portant le produit programme d'ordinateur décrit précédemment.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 illustre schématiquement un véhicule automobile équipé d'un système d'aide à la conduite selon l'invention.
La figure 2 illustre un premier exemple d'une situation de conduite pour le véhicule automobile selon l'invention.
La figure 3 illustre un deuxième exemple d'une situation de conduite pour le véhicule automobile selon l'invention.
La figure 4 représente un ordinogramme d'un mode d'exécution d'un procédé de détection d'évènements d'intérêt pour un véhicule automobile selon l'invention.

Un grand nombre de véhicules automobiles 100 utilisés au quotidien sont équipés de systèmes d'aide à la conduite 10 qui assistent les conducteurs desdits véhicules 100 pour prévenir des situations dangereuses qui risqueraient d'aboutir à un accident.

Le domaine de conception opérationnelle, aussi appelé « ODD », relatif à l'expression anglaise « Operational Design Domain », est un terme désignant un contexte opérationnel particulier pour un système automatisé, souvent utilisé dans le domaine des véhicules 100 équipés de systèmes d'aide à la conduite 10, et en particulier dans le domaine des véhicules autonomes. Ce contexte opérationnel est défini par un ensemble de conditions, notamment environnementales, géographiques, temporelles et autres. Dans la suite du document, l'acronyme « ODD » est utilisé pour nommer l'ensemble des situations et conditions pour lesquelles un système d'aide à la conduite 10 a été conçu.

Un ODD d'un véhicule est notamment défini par une taxonomie de données parmi lesquelles :
- des données relatives à l'infrastructure routière, notamment les types de routes qui peuvent être empruntées par le véhicule (autoroute, nationale, départementale...), les types d'aménagements pouvant être pris en compte par le véhicule (rond-point, échangeur), des marquages au sol de voies de circulation, etc.
- des données relatives à la météorologie, par exemple la possibilité ou non pour le véhicule de se déplacer lorsqu'il pleut, ou lorsqu'il neige, lorsqu'il y a du brouillard,
- des conditions de luminosité, notamment la possibilité pour un véhicule de se déplacer de nuit sur une route non éclairée,
- des données relatives aux types d'objets (véhicules, obstacles, etc.) susceptibles de se situer dans un environnement de circulation du véhicule.

Généralement, l'acronyme « OD » (relatif à l'expression Operational Domain) est utilisé pour nommer le contexte routier, c'est-à-dire l'environnement dans lequel évolue réellement un véhicule automobile 100 à un instant donné. Un véhicule 100 circule normalement dans un contexte routier OD compatible avec son ODD.

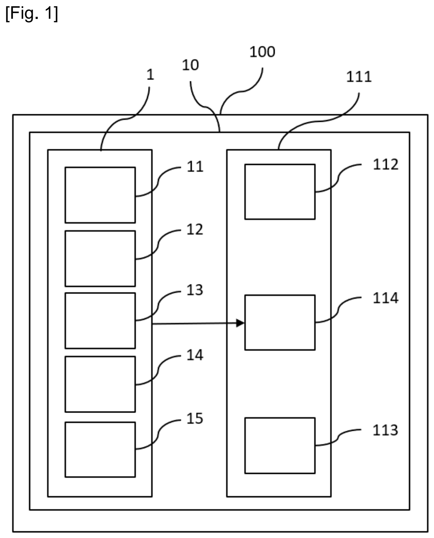

La plupart de ces véhicules automobiles 100 sont également équipés de divers moyens 11, 12, 13, 14, 15 de perception de l'environnement qui leur permettent de détecter une variété de données concernant l'environnement extérieur au véhicule. Un exemple d'un véhicule automobile 100 équipé d'un mode de réalisation d'un système d'aide à la conduite 10 est décrit ci-dessous en référence à la figure 1, faite à titre non limitatif.

Le véhicule 100 comporte une unité électronique et/ou informatique de traitement, ci-après appelée calculateur 111, comprenant au moins un microprocesseur 112, au moins une mémoire 113 et des interfaces d'entrée et/ou de sortie 114. Grâce à ses interfaces d'entrée, le calculateur 111 est adapté à recevoir différentes données d'entrée qui proviennent de divers moyens de perception 1 ou de calculateurs tiers (non illustrés sur les dessins).

Le système d'aide à la conduite 10 comprend ainsi divers moyens de perception 1 de l'environnement du véhicule qui peuvent comprendre tout ou partie des moyens suivants :
- des moyens d'observation 11 de l'état du véhicule, et/ou
- des moyens de perception 12 de l'environnement proche du véhicule, et/ou
- des moyens de géolocalisation 13 du véhicule, et/ou
- des moyens de communication 14 du véhicule avec une infrastructure routière et/ou avec d'autres véhicules, et/ou
- des moyens 15 de connexion à internet.

La portée de ces moyens de perception de l'environnement dépend en partie de leur nature.

Les moyens d'observation 11 de l'état du véhicule peuvent comprendre un moyen d'observation d'un réseau de données internes au véhicule 100, par exemple de type bus CAN. Les données transmises via le réseau de données internes peuvent comprendre par exemple des mesures instantanées de vitesse et/ou accélération et/ou jerk du véhicule automobile 100, ou encore l'angle et la vitesse de rotation du volant, l'état des pédales de frein ou d'accélération, etc.

Les moyens de perception 12 de l'environnement proche du véhicule 100 peuvent comprendre des radars et/ou des lidars et/ou des caméras. D'autres modes de réalisation des moyens de perception 12 sont envisageables.

Les moyens de géolocalisation 13 du véhicule 100 peuvent comprendre une carte de navigation numérique et des données issues d'un système de localisation, par exemple de type GPS, permettant au conducteur de localiser son véhicule automobile 100 sur la carte de navigation numérique, et donc d'accéder à des informations relatives au réseau routier RR, notamment à une description topologique et géométrique du réseau routier RR. Le réseau routier RR peut comprendre plusieurs zones géographiques avec des environnements distincts, telles que des zones urbaines, des zones rurales, des portions de voies rapide ou d'autoroute, des aires de repos et/ou des aires de stationnement, etc. Les informations relatives au réseau routier RR peuvent en outre comprendre des informations sémantiques. Il peut s'agir par exemple de la présence d'un panneau indiquant une règle à suivre sur une portion de route (vitesse maximale, interdiction de doubler), ou d'un panneau indiquant la présence d'un danger (risque d'animaux, d'éboulements, ...).

Les moyens de communication 14 du véhicule avec une infrastructure routière et/ou avec d'autres véhicules permettent également d'obtenir des données sur un ensemble d'objets perçus par les équipements d'infrastructure routière (par exemple des radars) et/ou les autres véhicules. Les données comprennent notamment des données de classification des objets et leurs dimensions, leur position ainsi que les vitesses associées, lorsqu'ils sont en mouvement.

Les moyens 15 de connexion à internet permettent par ailleurs d'obtenir des données contextuelles telles que la météo, l'état des routes et l'état du trafic, etc. En complément ou alternativement, grâce à ses interfaces d'entrée et sortie 114, le calculateur 111 peut être connecté à une puce de télécommunication qui permet au calculateur 111 de communiquer avec des entités tierces, distinctes du véhicule automobile 100. Il peut ainsi par exemple communiquer avec d'autres véhicules ou des infrastructures routières, au travers d'un protocole de communication de type V2V (pour « vehicle-to-vehicle ») ou V2I (pour « vehicule-to-infrastructure »). Il peut également utiliser les données de services de notification dynamiques ou de services collaboratifs.

Lorsqu'il est utilisé par un conducteur, le véhicule automobile 100 est amené à se déplacer dans un environnement donné, notamment au sein d'un réseau routier RR, généralement partagé avec d'autres utilisateurs. Un tel réseau routier RR comprend différents types de voies de circulation V0, V1, V-1, V2, V-2 qui s'étendent à travers une variété de zones géographiques avec des environnements différents les uns des autres (environnement urbain, environnement rural, etc.)

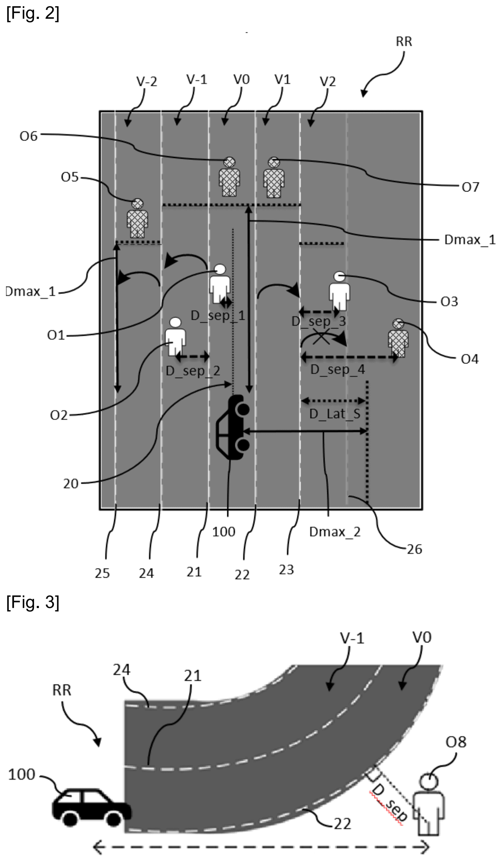

Un exemple d'une portion d'un réseau routier RR au sein duquel évolue le véhicule automobile 100 est illustré sur la figure 2. Dans cet exemple, donné à titre illustratif et non limitatif, le réseau routier RR comporte une pluralité de voies de circulation V0, V1, V-1, V2, V-2 délimitées les unes des autres par des éléments de références 21, 22, 23, 24, 25, 26, qui sont ici des lignes droites marquées sur le sol. Le véhicule 100 circule dans la voie référencée V0. Les voies de circulation V1 et V-1 sont les voies de circulation adjacentes à la voie V0, situées respectivement à droite et à gauche de la voie V0. La voie de circulation V-2 est adjacente à la voie V-1 et située sur la gauche de cette voie V-1. La voie de circulation V2 est adjacente à la voie V1 et située sur la droite de cette voie V1.

Sur cette figure 2, plusieurs objets O1, O2, O3, O4, O5, O6 et O7 sont présents sur les diverses voies de circulation V0, V1, V-1, V2, V-2. De tels objets peuvent également être présents en dehors des voies de circulation V0, V1, V-1, V2, V-2 délimitées par des éléments de référence 21 à 26, comme illustré par exemple sur la figure 3 avec le cas de l'objet O8.

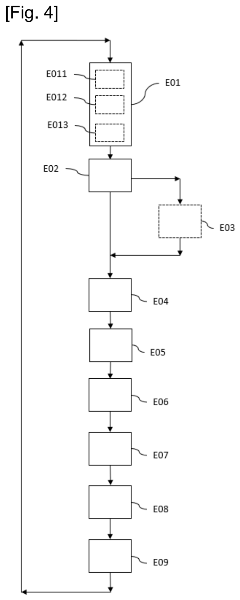

Afin de détecter des incidents tels que les objets O1 à O8 dans les environs du véhicule automobile 100 et de décider si les incidents détectés doivent être signalés pour la sécurité et le bien-être de l'ensemble des utilisateurs du réseau routier RR, un mode d'exécution d'un procédé de détection d'objets d'intérêt pour un véhicule automobile 100 circulant au sein d'un réseau routier RR est décrit ci-après en référence à la figure 4.

Le procédé est notamment exécuté par le système d'aide à la conduite 10 du véhicule automobile 100. Le procédé peut donc être également vu comme un procédé de fonctionnement d'un système d'aide à la conduite 10 ou comme un procédé de fonctionnement du véhicule automobile 100 circulant au sein d'un réseau routier RR. Le procédé est itératif, il est par exemple répété à intervalle régulier dans le temps.

Une première étape E01 du procédé consiste à reconnaître le contexte routier OD dans lequel circule le véhicule automobile 100. Plus précisément, cette première étape de reconnaissance E01 du procédé permet de reconnaître le contexte routier OD en identifiant l'ensemble de conditions, notamment environnementales, géographiques, temporelles, etc. qui caractérisent l'environnement dans lequel circule le véhicule automobile 100. Cette première étape E01 du procédé permet également de sélectionner le contexte opérationnel particulier ODD adapté au contexte routier OD identifié pour le système d'aide 10 à la conduite.

Pour ce faire, les diverses données acquises par les moyens 11, 12, 13, 14, 15 de perception de l'environnement du véhicule automobile 100 sont analysées pour en extraire des informations permettant d'identifier le contexte routier OD.

Par ailleurs, l'étape de reconnaissance E01 du contexte routier OD peut comprendre une sous-étape de géolocalisation E011 du véhicule automobile 100, afin de connaître la position dudit véhicule 100 dans le réseau routier RR au sein duquel il évolue. De cette façon, il est possible de déterminer dans quelle zone géographique le véhicule 100 se trouve afin de compléter les informations relatives au contexte routier OD.

Selon un mode de réalisation, l'étape de reconnaissance E01 du contexte routier OD peut comprendre une sous-étape de détermination E012 d'une première distance maximale Dmax_1 selon une direction d'avancement du véhicule automobile 100 et une sous-étape de détermination E013 d'une deuxième distance maximale Dmax_2 selon une direction latérale, la direction latérale étant perpendiculaire à la direction d'avancement du véhicule automobile 100.

Les première et deuxième distances maximales Dmax_1, Dmax_2 peuvent être variables d'un contexte routier OD à un autre. Selon un exemple, elles peuvent dépendre de la vitesse de déplacement du véhicule automobile 100, de l'architecture du réseau routier RR, du nombre et de la forme des voies de circulation, de la densité de circulation etc. Par exemple, pour un même environnement, la première distance maximale Dmax_1 peut être plus grande pour une voie de circulation en ligne droite qu'une première distance maximale Dmax_1 pour une voie de circulation présentant un rayon de courbure. En complément ou alternativement, la deuxième distance maximale Dmax_2 peut dépendre de la densité de circulation : elle est par exemple plus réduite lorsque le véhicule automobile 100 circule dans un environnement présentant une forte densité de circulation que lorsque le véhicule automobile 100 circule dans un environnement présentant une densité de circulation plus faible.

Déterminer une première distance maximale Dmax_1 et une deuxième distance maximale Dmax_2 permet de délimiter un périmètre opérationnel pour la prochaine étape du procédé : une fois le contexte routier OD identifié, le procédé passe à une étape de détection E02 d'au moins un élément de référence 21, 22, 23, 24, 25, 26 et d'au moins un objet d'intérêt O1 à O8 par les moyens 11, 12, 13, 14, 15 de perception de l'environnement du véhicule automobile 100 dans le périmètre opérationnel ainsi défini. Autrement dit, la délimitation d'un périmètre opérationnel sur la base des première et deuxième distances maximales Dmax_1, Dmax_2 permet d'assurer une qualité suffisante des détections effectuées au cours de l'étape de détection E02. Ainsi, le procédé ne tient pas compte du ou des objets O1 à O8 localisés en dehors du périmètre opérationnel délimité par la première distance maximale Dmax_1 et par la deuxième distance maximale Dmax_2.

Dans le contexte de cette demande de brevet, les éléments de référence 21, 22, 23, 24, 25, 26 sont des marqueurs visibles ou implicites qui délimitent la largeur d'une voie de circulation V0, V1, V-1, V2, V-2. Plus précisément, deux éléments de référence 21, 22 situés de part et d'autre du véhicule 100 considéré peuvent déterminer la largeur de la voie sur laquelle circule ledit véhicule 100. Les éléments de référence 21, 22, 23, 24, 25, 26 sont par exemples des marquages au sol, une glissière d'autoroute, une barrière, etc. D'une manière générale, tout élément permettant de délimiter une voie de circulation V0, V1, V-1, V2, V-2 pour un véhicule peut servir d'élément de référence.

Optionnellement, dans le cas où plusieurs éléments de référence 21, 22, 23, 24, 25, 26 distincts sont détectés, le procédé comporte en outre une étape d'identification E03 du nombre de voies de circulation V0, V1, V-1, V2, V-2. Le procédé est alors en mesure de distinguer les différentes voies de circulation V0, V1, V-1, V2, V-2 les unes des autres. Il peut plus particulièrement identifier la voie de circulation V0 sur laquelle évolue le véhicule automobile 100 considérée, ainsi que les potentielles voies de circulation adjacentes V1, V-1, V2, V-2, lorsqu'elles sont présentes, comme dans le cas illustré sur la figure 2 par exemple.

Au cours de cette même étape de détection E02, au moins un objet O1 à O8 est détecté par les moyens 11 à 15 de perception de l'environnement du véhicule automobile 100. Le terme « objet » peut se rapporter à un objet physique présent dans l'environnement du véhicule automobile 100, tel un obstacle, ou à un évènement se déroulant dans l'environnement dudit véhicule automobile 100 au moment de l'étape de détection E02. De cette façon, une même étape de détection E02 remplit deux fonctions distinctes : elle permet d'une part de repérer le ou les éléments de référence 21, 22, 23, 24, 25, 26 qui permettent de délimiter la ou les voies de circulation V0, V1, V-1, V2, V-2, et d'autre part de détecter des objets O1, O2, O3, O4, O5, O6, O7, O8 qui peuvent présenter une situation à risque pour les utilisateurs du réseau routier RR.

Le procédé passe ensuite à une étape d'affectation E04 d'un indice de confiance à chaque élément de référence 21, 22, 23, 24, 25 détecté. Cette étape peut être effectuée directement par les moyens 11, 12, 13, 14, 15 de perception de l'environnement du véhicule 100, ou plus généralement par le système d'aide à la conduite 10 du véhicule automobile 100. L'indice de confiance peut être déterminé en fonction de la cohérence entre des données fournies par un premier moyen de perception et un deuxième moyen de perception distinct du premier moyen de perception.

Selon un mode de réalisation, l'indice de confiance peut s'apparenter à une probabilité d'existence qui reflète la certitude quant à la présence et/ou à la nature de l'élément de référence 21, 22, 23, 24, 25 détecté. Ceci est particulièrement avantageux lorsque les conditions de détection des éléments de référence 21, 22, 23, 24, 25 sont défavorables, par exemple dans le cas d'une dégradation du marquage au sol, ou lorsque les conditions météorologiques ne sont pas optimales (luminosité défavorable à cause d'un soleil rasant, brouillard, ou autre). Par exemple, l'indice de confiance affecté à un marquage au sol partiellement effacé sera inférieur à l'indice de confiance affecté à un marquage au sol bien visible. Ainsi, dans l'exemple de la figure 2, l'élément de référence 26 n'est pas assez visible et l'indice de confiance qui lui est affecté est inférieur au seuil de confiance prédéterminé.

Le procédé passe ensuite à une étape d'identification E05 d'un type du ou des éléments de référence 21, 22, 23, 24, 25, 26 détectés et/ou d'un type du ou des objets d'intérêt O1, O2, O3, O4, O5, O6, O7 détectés. L'étape d'identification E05 consiste à reconnaître la nature du ou des éléments de référence 21, 22, 23, 24, 25, 26 détectés et/ou à reconnaître la nature de ou des objets d'intérêt O1, O2, O3, O4, O5, O6, O7 détectés.

Pour chaque élément de référence 21, 22, 23, 24, 25 détecté, un type d'élément lui est attribué, choisi parmi un ensemble de types d'éléments. Ainsi, cette étape d'identification E05 du procédé permet par exemple de différencier un marquage au sol d'un autre type de délimitation physique, telle qu'une glissière d'autoroute par exemple. De manière similaire, les composants du système d'aide à la conduite 10 sont notamment configurés pour reconnaître les objets et/ou incidents anormaux autour du véhicule automobile 100 : ils peuvent par exemple distinguer les divers types d'obstacles et/ou incidents détectés et les identifier. Dans le cas de la figure 3 par exemple, le procédé est en mesure d'identifier l'objet détecté comme un piéton O8 présent à proximité des voies de circulation V0, V1, V-1, V2, V-2. Par ailleurs, l'étape d'identification E05 permet de classer le ou les éléments de référence 21, 22, 23, 24, 25, 26 détectés et le ou les objets d'intérêt O1, O2, O3, O4, O5, O6, O7 détectés dans des catégories préférentiellement prédéfinies.

Selon un cas particulier, il se peut que tous les indices de confiance affectés au cours de l'étape E04 aux éléments de référence 21, 22, 23, 24, 25, 26 détectés au cours de l'étape E02 soient trop bas pour identifier lesdits éléments de référence 21, 22, 23, 24, 25, 26 au cours de l'étape E05. Dans ce cas particulier, une trajectoire prévisionnelle 20 du véhicule 100 peut être considérée comme un élément de référence. Ceci peut également s'appliquer dans le cas où le véhicule 100 se trouve dans un espace ouvert dans lequel aucun élément de référence extérieur n'est détecté par les moyens 11, 12, 13, 14, 15 de perception de l'environnement du véhicule automobile 100. Ces cas particuliers ne sont pas illustrés sur les figures.

Le procédé passe ensuite à une étape de détermination E06 d'une distance latérale de sécurité D_Lat_S pour chaque élément de référence 21, 22, 23, 24, 25 présentant un indice de confiance supérieur à un seuil de confiance prédéterminé. Autrement dit, seuls les éléments de référence 21, 22, 23, 24, 25 auquel un indice de confiance supérieur au seuil de confiance prédéterminé a été affecté sont considérés dans la suite du procédé, tandis que le ou les éléments de référence 26 pour lesquels l'indice de confiance est inférieur au seuil de confiance prédéterminé ne sont pas pris en compte dans la suite du procédé.

La distance latérale de sécurité D_Lat_S correspond à un seuil de distance latéral maximal. Elle est déterminée en fonction du contexte routier OD, en fonction de l'élément de référence 21, 22, 23, 24, 25, 26 détecté, et en fonction du ou des objets O1, O2, O3, O4, O5, O6, O7, O8 détectés. La distance latérale de sécurité D_Lat_S est calculée à partir de l'élément de référence 21, 22, 23, 24, 25, 26 à laquelle elle est associée. Pour des soucis de clarté, seul un exemple d'une distance latérale de sécurité D_Lat_S, associé à l'élément de référence 23, est illustré sur la figure 2. La distance latérale de sécurité D_Lat_S est définie selon une direction perpendiculaire à une trajectoire prévisionnelle 20 du véhicule 100.

Ainsi, la distance latérale de sécurité D_Lat_S dépend du type d'élément de référence 21, 22, 23, 24, 25 détecté. A titre d'exemple, la distance latérale de sécurité D_Lat_S est par exemple de quatre mètres pour une ligne marquée au sol, de deux mètres pour un muret le long d'une voie de circulation, et de 1.5 mètre pour une glissière de sécurité sur le bord d'une voie d'autoroute.

La distance latérale de sécurité D_Lat_S dépend également du contexte routier. Par exemple, la présence d'un piéton ou d'un animal à proximité de la voie ne présente pas le même danger aux abords d'une voie d'autoroute, ou dans un parking d'une zone commerciale.

La distance latérale de sécurité D_Lat_S peut dépendre également du nombre de voie de circulation V0, V-1, V1, V-2, V2

Dans le cas de la figure 2, tous les éléments de référence 21, 22, 23, 24, 25 détectés et identifiés sont des lignes marquées au sol, les distances latérales de sécurité D_Lat_S pour chacun de ces éléments de référence 21, 22, 23, 24, 25 peuvent avoir une même valeur qui peut être supérieure ou égale à la distance qui sépare deux éléments de référence 21, 22, 23, 24, 25 consécutifs, ou bien des valeurs différentes. En particulier, pour deux éléments de référence 21, 22, 23, 24, 25 d'un même type présentant un même indice de confiance, ou du moins un indice de confiance similaire, la distance latérale de sécurité D_Lat_S associé à l'élément de référence le plus proche du véhicule 100 peut être plus grande que la distance latérale de sécurité D_Lat_S associé à l'autre élément de référence, plus éloigné du véhicule 100.

Le procédé passe ensuite à une étape de calcul E07, pour chaque objet d'intérêt O1, O2, O3, O4, O5, O6, O7, O8, d'une distance de séparation D_sep entre chacun des objets O1 à O8 détectés et un élément de référence 21 à 25 associé à chacun desdits objets O1 à O8 détectés. L'élément de référence 21 à 25 associé à un objet O1 à O8 détecté répond à une pluralité de critères : cet élément de référence 21 à 25 présente un indice de confiance supérieur au seuil de confiance prédéterminé, il est situé entre le véhicule 100 et ledit objet d'intérêt O1, O2, O3, O4, O5, O6, O7, O8 détecté et si plusieurs éléments de référence répondent à ces deux premiers critères, c'est l'élément de référence 21 à 25 le plus proche de l'objet d'intérêt O1, O2, O3, O4, O5, O6, O7, O8 détecté qui est retenu comme l'élément de référence associé audit objet.

A défaut, si l'élément de référence 21 à 25 détecté ne remplit pas un ou plusieurs des critères indiqués ci-dessus, c'est la trajectoire prévisionnelle 20 du véhicule automobile 100 qui sert d'élément de référence pour l'étape de calcul E07.

Selon un mode de réalisation préférentiel, au cours de l'étape de calcul E07, la distance de séparation D_sep calculée correspond à la distance minimale séparant l'objet O1, O2, O3, O4 détecté et un élément de référence 21, 23, associé. De manière générale, cette distance de séparation D_sep est définie dans une direction perpendiculaire à une trajectoire prévisionnelle 20 du véhicule automobile 100, comme illustré sur les figures 2 et 3.

Sur la figure 3, un véhicule automobile 100 circule sur une portion de réseau routier RR comportant deux voies V0, V-1 distinctes délimitées par des éléments de référence 21, 22, 24, ici des marquages au sol sous forme de lignes discontinues. Un objet O8 est détecté en dehors des voies de circulation V0, V-1. La distance de séparation D_sep calculée dans ce cas particulier correspond à la distance minimale qui sépare l'objet O8 détecté de l'élément de référence 22 associé qui se situe entre le véhicule 100 et l'objet O8 détecté. La direction de mesure de cette distance de séparation D_sep est donc perpendiculaire à une trajectoire prévisionnelle 20 du véhicule 100, ce qui permet de tenir compte du rayon de courbure de la ligne discontinue qui forme ici l'élément de référence 22. Ce type de calcul permet de ne pas surestimer la distance de séparation pour l'objet O8 détecté.

Dans le cas particulier où l'objet O1 détecté se situe dans la même voie de circulation V0 que le véhicule 100, c'est la trajectoire prévisionnelle 20 du véhicule 100 qui sert d'élément de référence pour calculer la distance latérale de sécurité D_Lat_S et la distance de séparation D_sep_1. Par exemple, dans le cas de l'objet O1 illustré sur la figure 2, la distance de séparation D_sep_1 calculée correspond à la distance entre la trajectoire prévisionnelle 20 du véhicule 100 et l'objet O1.

Lorsque l'objet O2, O3, O4 détecté se trouve dans une autre voie de circulation V1, V-1, V2, V-2, différente de celle où circule le véhicule 100, un élément de référence 21, 22, 23 situé entre le véhicule automobile 100 et l'objet O2, O3, O4 détecté est utilisé pour calculer la distance de séparation D_sep_2, D_sep_3, D_sep_4. Ce cas est notamment illustré sur la figure 2 avec les objets O2, O3 et O4.

Dans ce même mode de réalisation, lorsque plusieurs éléments de référence 21, 22, 23 sont présents entre le véhicule automobile 100 et l'objet O2, O3, O4 détecté, c'est l'élément de référence associé le plus proche dudit objet O2, O3, O4 détecté qui est utilisé pour calculer la distance de séparation D_sep. Ceci permet de calculer les distances de séparation D_sep avec une précision plus accrue.

Par exemple, dans le cas de l'objet O2 illustré sur la figure 2, la distance de séparation D_sep_2 calculée correspond à la distance entre ledit objet O2 et l'élément de référence 21 sur la figure 2 ; tandis que dans le cas de l'objet O3 illustré sur cette même figure 2, la distance de séparation D_sep_3 calculée correspond à la distance entre ledit objet O3 et l'élément de référence 23 sur la figure 2.

Le procédé passe ensuite à une étape de comparaison E08 du résultat de la distance de séparation D_sep calculée lors de l'étape E07 précédente avec la distance latérale de sécurité D_Lat_S déterminée précédemment. Autrement dit, cette étape de comparaison E08 permet de vérifier si la distance de séparation D_sep calculée pour chacun des objets O1, O2, O3, O4 détectés est supérieure, égale ou inférieur à la distance latérale de sécurité D_Lat_S déterminée pour l'élément de référence ayant permis de calculer la distance de séparation D_sep. Par exemple, dans le cas de l'objet O3, la distance de séparation D_sep_3, qui correspond à la distance entre ledit objet O3 et l'élément de référence 23 sur la figure 2, est inférieure à la distance latérale de sécurité D_Lat_S déterminée pour cet élément de référence 23. Selon un autre exemple, dans le cas de l'objet O4, la distance de séparation D_sep_4, qui correspond à la distance entre ledit objet O4 et l'élément de référence 23 sur la figure 2, est inférieure à la distance latérale de sécurité D_Lat_S déterminée pour cet élément de référence 23.

Le procédé passe enfin à une étape de signalement E09 de l'objet O1 à O8 détecté dans le cas où la distance de séparation D_sep calculée au cours de l'étape E07 est inférieure à la distance latérale de sécurité D_Lat_S déterminée au cours de l'étape E06. Cette étape de signalement E09 est conditionnée par le type de contexte routier OD dans lequel se trouve le véhicule 100. Autrement dit, un même objet détecté dans un premier contexte routier peut être considéré comme un objet d'intérêt et faire l'objet d'un signalement, tandis que le même objet détecté dans un deuxième contexte routier différent du premier contexte routier peut ne pas être signalé, car il ne représente pas un objet d'intérêt dans ce deuxième contexte routier.

Dans le cas de l'objet O1, la distance de séparation D_sep_1 est inférieure à la distance latérale de sécurité D_Lat_S déterminée précédemment, c'est pourquoi l'objet O1 va être signalé au cours de l'étape de signalement E09.

Dans le cas de l'objet O2 la distance de séparation D_sep_2 est inférieure à la distance latérale de sécurité D_Lat_S déterminée précédemment, c'est pourquoi le procédé va signaler la présence de l'objet O2 au cours de l'étape de signalement E09.

Dans le cas de l'objet O3 illustré sur la figure 2, la distance de séparation D_sep_3 calculée correspond à la distance entre ledit objet O3 et l'élément de référence 23 sur la figure 2. Là encore, la distance de séparation D_sep calculée est inférieure à la distance latérale de sécurité D_Lat_S déterminée précédemment, c'est pourquoi le procédé va signaler la présence de l'objet O3 au cours de l'étape de signalement E09.

Dans le cas de l'objet O4 illustré sur la figure 2, la distance de séparation D_sep_4 calculée correspond à la distance entre ledit objet O4 et l'élément de référence 23 sur la figure 2. Cette distance de séparation D_sep est supérieure à la distance latérale de sécurité D_Lat_S déterminée précédemment. Par ailleurs, l'objet O4 se situe à une distance supérieure à la deuxième distance maximale Dmax_2 déterminée au cours de la sous-étape E012 de l'étape de reconnaissance E01, c'est pourquoi le procédé ne va pas signaler la présence de l'objet O4 au cours de l'étape de signalement E09.

Dans les cas des objets O5, O6 et O7, ces objets se situent à une distance supérieure à la première distance maximale Dmax_1 déterminée au cours de la sous-étape E012 de l'étape de reconnaissance E01. Tant que les objets O5, O6 et O7 restent à une distance supérieure à la première distance maximale Dmax_1 déterminée, le procédé ne va pas signaler la présence de ces objets O5, O6 et O7 au cours de l'étape de signalement E09.

Il est ainsi possible d'établir un procédé et un système d'aide à la conduite 10 pour un véhicule automobile 100 permettant de systématiser le signalement d'objets d'intérêt pertinents avec des critères objectifs et une précision accrue. Ceci permet d'éviter de signaler des objets et/ou évènements trop éloignés et/ou potentiellement erronés.

Dit autrement, l'invention évite de signaler une grande quantité d'objets, incluant des objets ne présentant pas de réel danger. En distinguant les éléments de référence selon différents types qui diffèrent par leur apport sécuritaire (une simple ligne étant moins sécuritaire qu'une glissière elle-même moins sécuritaire qu'un muret), et en affectant un indice de confiance à chaque élément de référence, on peut déterminer des distances latérales optimisées séparant les objets qui présentent un danger de façon certaines, et qui seront signalés, et les objets qui ne présentent pas un danger de façon certaine, et qui ne seront pas signalés. On s'assure ainsi de ne pas surcharger d'information les automobilistes auxquels les informations signalées seront ensuite redescendues, ce qui in fine améliore leur attention aux objets les plus dangereux.

## Revendications

1. Procédé de signalement d'objets d'intérêt, mis en œuvre par un véhicule automobile (100) comprenant des moyens (11, 12, 13, 14, 15) de perception de l'environnement et circulant au sein d'un réseau routier (RR), le procédé étant **caractérisé en ce qu'**il comprend les étapes suivantes :
- Une étape de reconnaissance (E01) d'un contexte routier (OD) dans lequel circule le véhicule automobile (100), le contexte routier (OD) correspondant à l'environnement et aux conditions dans lesquels évolue le véhicule automobile (100);
- Une étape de détection (E02) d'au moins un élément de référence (21, 22, 23, 24, 25, 26) et d'au moins un objet d'intérêt (O1, O2, O3, O4, O5, O6, O7, O8) par les moyens (11, 12, 13, 14, 15) de perception de l'environnement du véhicule automobile (100), l'au moins un élément de référence comprenant des marquages au sol, une glissière d'autoroute, et/ou une barrière ou muret permettant de délimiter une voie de circulation ;
- Une étape d'affectation (E04) d'un indice de confiance à chaque élément de référence (21, 22, 23, 24, 25, 26) détecté ;
- Une étape d'identification (E05) d'un type de chaque élément de référence (21, 22, 23, 24, 25, 26) détecté, parmi un premier type constitué par les marquages au sol, un deuxième type constitué par les glissières d'autoroute, et un troisième type constitué par les barrières ou muret pour délimiter une voie de circulation ;
- Une étape de détermination (E06) d'une distance latérale de sécurité (D_Lat_S) pour chaque élément de référence (21, 22, 23, 24, 25, 26) présentant un indice de confiance supérieur à un seuil de confiance prédéterminé, la distance latérale de sécurité (D_Lat_S) étant définie selon une direction perpendiculaire à une trajectoire prévisionnelle (20) du véhicule (100), la distance latérale de sécurité (D_Lat_S) étant déterminée en fonction du contexte routier (OD) et en fonction du type de l'élément de référence (21, 22, 23, 24, 25, 26), et seuls les éléments de référence (21, 22, 23, 24, 25) présentant un indice de confiance supérieur au seuil de confiance prédéterminé étant considérés dans les étapes suivantes ;
- Une étape de calcul (E07), pour chaque objet d'intérêt (O1, O2, O3, O4, O5, O6, O7, O8), d'une distance de séparation (D_sep) entre ledit objet d'intérêt (O1, O2, O3, O4, O5, O6, O7, O8) et un élément de référence (21, 22, 23, 24, 25) associé, l'élément de référence (21, 22, 23, 24, 25) associé étant l'élément de référence présentant un indice de confiance supérieur au seuil de confiance prédéterminé, le plus proche dudit objet d'intérêt (O1, O2, O3, O4, O5, O6, O7, O8) et situé entre le véhicule (100) et ledit objet d'intérêt (O1, O2, O3, O4, O5, O6, O7, O8) ou à défaut, la trajectoire prévisionnelle (20) du véhicule (100) ;
- Une étape de comparaison (E08) de la distance de séparation (D_sep) calculée avec la distance latérale de sécurité (D_Lat_S) déterminée précédemment ;
- Une étape de signalement (E09) de l'objet (O1, O2, O3, O4, O5, O6, O7, O8) dans le cas où la distance de séparation (D_sep) calculée est inférieure à la distance latérale de sécurité (D_Lat_S) déterminée précédemment, l'objet n'étant pas signalé dans le cas où la distance de séparation (D_sep) calculée est supérieure à la distance latérale de sécurité (D_Lat_S) déterminée précédemment.

2. Procédé selon la revendication précédente, **caractérisé en ce que** l'étape de reconnaissance (E01) du contexte routier (OD) comprend une sous-étape de géolocalisation (E011) du véhicule automobile (100), afin de connaître sa position dans le réseau routier (RR) au sein duquel il évolue.

3. Procédé selon l'une des revendications précédentes, **caractérisé en ce que** l'étape de reconnaissance (E01) du contexte routier (OD) comprend une sous-étape de détermination (E012) d'une première distance maximale (Dmax_1) selon une direction d'avancement du véhicule automobile (100) et une sous-étape de détermination (E013) d'une deuxième distance maximale (Dmax_2) selon une direction latérale, la direction latérale étant perpendiculaire à la direction d'avancement du véhicule automobile (100), de sorte à délimiter un périmètre opérationnel, et **en ce que** l'étape de détection (E02) est effectuée dans le périmètre opérationnel défini.

4. Procédé selon l'une des revendications précédentes, **caractérisé en ce que** dans le cas où plusieurs éléments de référence (21, 22, 23, 24, 25, 26) distincts sont détectés, le procédé comporte en outre une étape d'identification (E03) du nombre de voies de circulation (V0, V1, V-1, V2, V-2).

5. Procédé selon l'une des revendications précédentes, **caractérisé en ce qu'**au cours de l'étape de calcul (E07), la distance de séparation (D_sep) calculée correspond à la distance minimale séparant l'objet (O1, O2, O3, O4, O5, O6, O7, O8) détecté et l'élément de référence (21, 22, 23, 24, 25) associé.

6. Système d'aide à la conduite (10) pour un véhicule automobile (100), le système (10) comprenant des éléments (1, 11, 12, 13, 14, 15, 111, 112, 113, 114) matériels et/ou logiciels mettant en œuvre le procédé selon l'une des revendications 1 à 5, notamment des éléments (1, 11, 12, 13, 14, 15, 111, 112, 113, 114) matériels et/ou logiciels conçus pour mettre en œuvre le procédé selon l'une des revendications précédentes.

7. Véhicule automobile **caractérisé en ce qu'**il comprend un système d'aide à la conduite (10) selon la revendication 6.

8. Produit programme d'ordinateur comprenant des instructions de code de programme enregistrées sur un support lisible par ordinateur pour mettre en œuvre les étapes du procédé selon l'une quelconque des revendications 1 à 5 lorsque ledit programme fonctionne sur un ordinateur, caractérisé en ce en ce qu'il comprend des instructions qui, lorsque le programme est exécuté par l'ordinateur, conduisent celui-ci à mettre en œuvre le procédé selon l'une quelconque des revendications 1 à 5.

9. Support d'enregistrement de données, lisible par un ordinateur, sur lequel est enregistré un programme d'ordinateur comprenant des instructions de code de programme de mise en œuvre du procédé selon l'une des revendications 1 à 5 qui, lorsqu'elles sont exécutées par un ordinateur, conduisent celui-ci à mettre en œuvre le procédé selon l'une quelconque des revendications 1 à 5.

10. Signal d'un support de données, portant le produit programme d'ordinateur selon la revendication 8.
